# EUROPEAN PATENT APPLICATION

(11) **EP 0 763 665 A1**
(43) Date of publication of application: **19.03.1997**
(21) Application number: 96114956.4
(22) Date of filing: 18.09.1996
(51) Int. Cl.: F16B 13/14, F16B 13/08

(54) **Adhesive insert anchor**

(30) Priority: 18.09.1995 US 3925; 27.12.1995 US 9714; 17.09.1996 US
(71) Applicant: Stahl GmbH, 73650 Winterbach (DE)
(72) Inventor: Heminger, David V., Tulsa, OK 74137. (US)
(74) Representative: Raeck, Wilfrid, Dipl.-Ing.

(57) **Abstract**

An adhesive insert anchor including an anchor body (12) and a screw member (14) for insertion into a drilled hole in a substrate containing an adhesive. The anchor body further including an integral friction segment (18) and an adhesion segment (16). The friction segment (18) includes an internally threaded cavity in which to receive the screw member and a knurled portion. The adhesion segment (16) includes a cylindrical section and a plurality of saucer-shaped buttons (32) positioned along its length ending with a terminal button. The buttons on the adhesion segment provide greater surface area tor contact between the adhesive and the anchor. The friction segment (18) has an external diameter substantially the same as the diameter of the hole drilled in the substrate, thereby providing a friction fit between the anchor body and the walls of the substrate hole. The external diameter of the adhesion segment (16) is smaller than the external diameter of the friction segment (18) so that when the anchor body (12) is inserted into the hole in the substrate, there is space between the adhesion segment and the walls of the hole which is completely filled by adhesive so as to securely bond the anchor body with the substrate. The friction fit of the friction segment (18) maintains the adhesion segment of the anchor body (12) a proper distance from the bottom of the substrate hole and provides for light-duty loading of the anchor while the adhesive cures. Upon installation, the adhesion segment (16) is twisted into the hole, thereby agitating the adhesive which disrupts the substrate dust remaining on the walls of the hole. This allows proper adhesion between the adhesive and the concrete. With the addition of a sleeve (68) the anchor can be used in overhead applications. An alternate embodiment includes the addition of an insulator (258) fitted to the anchor body to form the friction segment. The insulator (258) being electrically non-conductive and the adhesive being electrically non-conductive to form a dielectric adhesive insert anchor.

## Description

### BACKGROUND OF THE INVENTION

### 1. FIELD OF THE INVENTION

The present invention relates to an adhesive insert anchor for retaining an object against a substrate. The present invention further relates to an adhesive insert achor which is electrically insulated from the substrate.

### 2. DESCRIPTION OF THE PRIOR ART

The use of mechanical anchors disposed in a substrate and adhesives used to bond the anchor to the substrate are known in the art. These anchors are generally cylindrical in shape and include some type of means for securing an object to the substrate. Typically, a hole is drilled in the substrate, cleaned, and an amount of adhesive, such as epoxy, is inserted into the hole. The anchor is then inserted into the hole in contact with the adhesive, and the adhesive allowed to cure prior to placing the anchor under a load. The holding values of the anchors of the prior art are derived from the bond of the adhesive between the anchor and the substrate. This requires that the adhesive be allowed to cure prior to placing the anchor under a load. In addition, when the anchors of the prior art are installed, the adhesive has the potential of being displaced by the anchor and leaking around its external diameter which must be wiped away prior to loading. This may be an added problem if the anchor is configured with an internal cavity capable of receiving a threaded member. The internal cavity may becomes filled with adhesive, thereby preventing proper installation of the threaded member. A further problem with prior art designs is that the anchor is of a smaller diameter than the hole in the substrate and difficult to maintain in axial alignment with the hole. Difficulty is also encountered when attempting to install the anchor at a predetermined depth Attempts at overcoming this problem include additional apparatus which require added skill in installation and additional cost to the anchor.

Anchors using adhesive such as epoxy alone to retain them in the substrate experience a phenomena known as "long term creep" when subject to elevated temperatures and/or long term loading conditions wherein the epoxy turns into a gel-like state and the anchor is pulled out of the hole very slowly over time.

A problem often encountered in the industry when epoxy adhesive is used is the presence of voids when the epoxy is dispensed into the hole. These voids often remain when the epoxy cures and reduces the holding value of the anchor.

Another problem is the potential failure of the components of the epoxy (typically two, an epoxy and an activator) to mix completely before being dispensed into the hole. An attempt to solve the mixing problem is the addition of static mixing attachments to the epoxy tubes without any modification to the anchor itself. Such solutions have not been completely successful.

It is also known in the industry that if the epoxy cures with a high cross-link density, the epoxy will provide a stronger bond, and the holding values for the anchoring system will be significantly higher. No current anchoring systems provide for the application of pressure to the epoxy during the curing period which is understood to increase the cross-link density of the final polymer.

Many situations require the use of an anchor which has dielectric properties or is electrically insulated. For example, dielectric anchors are used to fasten railroad ties to a concrete substrate in the construction of railway tunnels for subway systems. In such applications, a large amount of electrical current flows through the tunnel system to propel the train or subway. Current of this magnitude could destroy the anchor if conducted through it, such as by direct contact with the means for transmitting current through the railway or subway tunnel system.

Furthermore, railway and subway tunnel systems are frequently constructed under bodies of water or underground where water or moisture is present Since water conducts electric current, the need for a dielectric anchor is evident This need is especially acute where concrete is the substrate. Concrete is known for its porosity and, thereby, its ability to absorb and hold water. The concrete may essentially become an electrical conductor through the water contained within it.

Dielectric anchors presently known in the art are constructed of a non-conductive material, most commonly nylon which is partially sealed in a plastic or metal jacket. A bolt member is threaded into the nylon core to fasten an object, such as a railroad tie, to the anchor. Since nylon is non-conductive, the bolt member is electrically insulated from the substrate. A problem, however, is the fact that although the strength of nylon approximates the strength of steel, pound-for-pound, an anchor including a nylon body would not produce the same holding values as an anchor constructed of steel of approximately the same size A need therefore, exists for an anchor having a steel anchor body which is electrically insulated from the substrate.

An additional problem with known dielectric anchors is that they are cast-in-place. A cast-in-place anchor is installed as the substrate is poured by laying out a template which includes a plurality Of anchors fastened to the object to be anchored and suspended into a form. Once the template is laid out, the substrate, most commonly concrete, is poured into the form and around the anchors. Once the substrate cures, the object is fastened to the substrate by the anchor. Problems associated with cast-in-place systems include the difficulty in positioning the template prior to pouring the substrate and particularly in aligning the anchors so as to be each properly suspended into the form. These problems are compounded by such factors as suspending the object being fastened (such as a railroad tie) above the form and the fact that the concrete should be poured at one time requiring several templates to be positioned prior to pouring.

Another significant problem associated with cast-in-place anchors is the difficulty in replacing an anchor if necessary. It is not practical to recast portions of substrate in order to recast an anchor.

A need, therefore, exists for an anchor which is electrically insulated from current which may be conducted through the substrate as well as electrically insulated from the object being anchored.

A further need exists for a dielectric anchor capable of being installed in a substrate after the substrate is cast

A need also exists for a dielectric anchor which can be replaced or reset without recasting the substrate.

A need exists for a dielectric anchor having a higher pull-out strength than a cast-in-place anchor.

A need, additionally, exists for an adhesive insert anchor which minimizes the voids in the epoxy dispensed into the substrate hole.

A need, therefore, exists for an adhesive insert anchor which minimizes the voids in the epoxy dispensed into the substrate hole.

Another need exists for an adhesive insert anchor which promotes additional mixing of the epoxy components in the hole during the installation process.

A need exists for an adhesive insert anchor which allows the epoxy to cure under pressure in the hole, producing improved holding values.

A need exists for an adhesive insert anchor having coactive holding capabilities producing significant holding values.

Additionally, a need exists for an adhesive insert anchor including an anchor body capable of being set to a predetermined depth.

A need also exists for an adhesive insert anchor which includes means for providing interim loading while the adhesive cures.

A further need exists for an adhesive insert anchor including means to prevent the leakage of adhesive around the anchor body during installation.

### SUMMARY OF THE INVENTION

This invention is a novel adhesive insert, drop-in, anchor providing effective adhesion of the anchor to the substrate through the use of an adhesive material. The novel anchor is comprised of an anchor body and a screw member. The anchor body includes an internally threaded cavity in which to receive the screw member. The anchor body is a unitary piece defined by an upper friction segment and a lower adhesion segment. The external diameter of the friction segment is greater than the external diameter of the adhesion segment. The length and diameter of the anchor body, and thereby the depth and diameter of the hole in the substrate, as well as the length and diameter of the screw member, may be varied, depending upon the desired application, holding value required, concrete variability, and thickness of the object being anchored.

The adhesion segment of the anchor body is a unitary piece of material defined by a series of buttons. Each button is saucer shaped with a rounded contour facing the terminal end of the anchor body and a flat shelf facing the friction segment. The rounded contour facilitates the flow of adhesive around the buttons and up the length or the adhesion segment to ensure complete immersion of the adhesion segment in adhesive. The flat shelf resists the anchor body from being pulled out of the hole, once the adhesive has cured.

The adhesion segment is substantially cylindrical between the buttons and is knurled to increase the surface area in contact with the adhesive. The number of buttons used on the adhesion segment depends upon the length of the anchor.

The friction segment has an external diameter substantially the same as the diameter of the hole drilled in the substrate into which the anchor body is inserted. The terminal end of the adhesion segment is inserted first. The friction segment provides a friction fit between the anchor body and the walls of the substrate hole. The external diameter of the adhesion segment is smaller than the external diameter of the friction segment so that when the anchor body is inserted into the hole in the substrate, there is a space between the anchor and the walls of the hole which is completely filled by adhesive so as to securely bond the anchor body with the substrate. The external diameter of the friction segment includes a knurled portion in order to increase the friction fit between the anchor body and the walls of the substrate hole. The knurled portion also resists rotation of the anchor body within the substrate hole because upon insertion of the anchor body, the knurls scar the inside of the substrate hole.

Installation of the adhesive insert anchor of the present invention begins with drilling a hole in the substrate, such as concrete, masonry, rock, or the like, to a predetermined depth. The hole is then cleaned using compressed air and a brush. After cleaning, a generous amount of adhesive is inserted in the bottom of the hole. The anchor body is then twisted into the hole in order to agitate the adhesive in order to eliminate voids, thoroughly mix the components of the adhesive, and dislodge substrate (concrete) dust from the walls of the hole allowing the adhesive to attack the porosity of the substrate. The anchor body is twisted into the hole until the friction segment reaches the top of the concrete. the anchor body is then driven into the hole so that the adhesion segment displaces the adhesive entirely around the adhesion segment.

The friction fit of the friction segment with the walls of the hole prohibit the excape of adhesive around the anchor body which might otherwise fill the internally threaded cavity. The friction fit also places the adhesive under pressure which compresses voids and increases cross-link density in the cured adhesive. It also forces the adhesive into the porous substrate, most commonly concrete, thereby obtaining a stronger adhesive/substrate bond.

The friction fit of the friction segment maintains the adhesion segment of the anchor body a predetermined distance from the bottom of the substrate hole so that a substantial amount of adhesive fills that space. Secondly, the friction fit of the friction segment holds the anchor body in place during the curing time of the adhesive. Thirdly, the friction fit provides for light-duty loading of the anchor while the adhesive cures. In this way, a time saving feature is provided so that the screw member may be threaded into the internally threaded cavity while the adhesive is curing, and the anchor may provide light-duty loading in order to anchor an object during the curing time of the adhesive Lastly, the friction fit retains the anchor body in the substrate in order to minimize or eliminate the problem of "long term creep" of the anchor body out of the adhesive.

The adhesive insert anchor of the present invention as described above provides independent coactive holding capabilities provided by the friction fit and the cured adhesive.

The screw member may be provided with a spacer in order to account for the thickness of the object being anchored. The screw member is removably threaded into the internally threaded cavity so that the object being anchored can be removed or replaced as desired. The screw member may be configured in many different ways such as a bolt, eyelet, or may be integral with the anchor body such as a threaded bolt or a permanent hold-down.

The adhesive insert anchor may be fitted with a sleeve so as to be used for overhead applications. The sleeve covers the adhesion segment and has an internal diameter so as to frictionally engage the friction segment When secured to the friction segment, the sleeve acts as a cup into which adhesive is dispensed so as to fill the sleeve. Once the hole is prepared, the sleeve is placed over it and the friction segment twisted so as to push it into the sleeve. This forces the adhesion segment and the adhesive into the hole. Once the friction segment frictionally engages the hole, the anchor body is then driven into the hole. A mess free adhesive insert anchor is thereby provided for overhead use.

Alternate embodiments include offsetting the longitudinal axis of a length of the friction segment from the longitudinal axis of the anchor body so as to receive an eccentric ring. The eccentric ring acts as a wedge or cam against the walls of the substrate hole, thereby providing additional holding value.

Another alternate embodiment may include a larger terminal button than the other terminal button into which channels are cut The channels facilitate the flow of adhesive around the adhesion segment of the anchor body.

A further alternate embodiment includes replacement of the buttons on the adhesion segment of the anchor body with a cylindrical section and a series or frustums positioned truncated end to base ending at the terminal end of the anchor body. The last frustum of the anchor body, whose truncated end defines the terminal end of the anchor body, is shorter in length than the other frustums and is designed to resist the occurrence of stress risers in the adhesive surrounding the adhesion segment. The series of frustums on the adhesion segment provide greater surface area for contact between the epoxy and the anchor in order to achieve greater holding values tor the anchor when it is placed under load.

Another alternate embodiment includes replacing the buttons of the adhesion segment with annular rounded ridges terminating with a rounded terminal end. The rounded terminal end and the annular rounded ridges having increasing external diameters from the annular rounded ridge closest to the friction segment with the greatest external diameter being the rounded terminal end so as to facilitate the movement of displaced adhesive around the adhesion segment. The annular rounded ridges provide greater resistance to stress risers in the cured adhesive.

In an alternate embodiment, an electrically non-conductive insulator may be fitted to the anchor body to form the friction segment. This insulator, being electrically non-conductive, and being the only part of the anchor body which directly contacts the substrate, electrically insulates the anchor body from the substrate. If the adhesive, such as epoxy, is electrically non-conductive, a dielectric anchor adhesive insert anchor results.

The dielectric anchor of the present invention may be used in any application where metal comes in contact with the substrate, concrete, and high voltage is involved. This dielectric adhesive insert anchor is installed after the concrete is cast, thereby, eliminating the alignment problems associated with cast-in-place anchors. Furthermore, the present anchor is capable of being reset or replaced by drilling the old adhesive out of the concrete hole, cleaning the hole, and then installing a new anchor. The present anchor could also act as a replacement for existing dielectric cast-in-place anchors which have pulled loose from the substrate.

The insulator at the dielectric adhesive insert anchor may be fitted to the anchor body by placing threads on the friction segment of the anchor body and internally threading the insulator with threads which mate the threads of the anchor body. The insulator is then screwed onto the anchor body. The insulator may also be press fit onto the anchor body, thereby eliminating the threads. The insulator should be fit into the anchor body to prevent adhesive from escaping between the insulator and the anchor body

An object of the invention is to provide an adhesive insert anchor that minimizes voids in the adhesive and increases cross-linking density of the epoxy adhesive cured under pressure created and maintained by the friction fit of the friction segment.

Another object of the invention is to provide an adhesive insert anchor that is easy to install, achieves excellent holding values, resists vibration, resists environmental conditions, and may include a removable screw member to provide for fastening, removal, and then refastening.

An object of the present invention includes providing a dielectric adhesive insert anchor with superior holding values.

A further object of the present invention includes an adhesive insert anchor which is electrically insulated from current which may be conducted through the substrate as well as electrically insulated from the object being anchored.

A yet further object of the present invention includes a dielectric adhesive insert anchor capable of being installed after the substrate cures.

A still further object of the present invention includes a dielectric adhesive insert anchor having a higher pull-out strength than a cast-in-place anchor.

An additional object of the invention is to provide an adhesive insert anchor that minimizes voids in the adhesive and increases cross-linking density of the epoxy adhesive cured under pressure created and maintained by the friction fit of the friction segment

Another object of the invention is to provide an adhesive insert anchor that is easy to install, achieves excellent holding values, resists vibration resists environmental conditions, and may include a removable screw member to provide for fastening, removal, and then refastening.

It is a further object of this invention to provide an anchor with coactive holding potential derived both from the adhesive bond between the anchor body and the substrate and from the friction fit of the friction segment with the walls of the substrate.

An additional object of this invention is to provide an adhesive insert anchor which provides interim loading potential derived from the friction fit of the friction segment with the walls of the substrate while the adhesive cures.

A still further object of the invention is to provide an adhesive insert anchor that allows the anchor body to be maintained at a proper predetermined depth in the substrate hole during cure of the adhesive.

A yet further object of the invention is to provide an adhesive insert anchor having an adhesive segment including a substantial surface area to contact with the adhesive, yet configured so as to resist the occurrence of stress risers in the cured adhesive.

These and other objects will become more apparent from the following description taken in conjunction with the drawings.

### BRIEF DESCRIPTION OF THE DRAWINGS

FIGURE 1 is a side view of the adhesive insert anchor of the present invention.

FIGURE 2 is a longitudinal cross-section of the anchor of FIGURE 1 taken along line 2-2 of FIGURE 1.

FIGURE 3 is the anchor of FIGURE 1 installed in a substrate with a bolt threaded in the cavity of the friction segment thereby anchoring a member to the substrate.

FIGURE 4 is a cut-away side view of a hole being drilled in a substrate.

FIGURE 5 is a cut-away side view of the hole or FIGURE 4 being cleaned of debris.

FIGURE 6 is a cut-away side view of the cleaned hole of FIGURE 5 wherein adhesive is being inserted using a static mixer.

FIGURE 7 is a cut-away partial side view of the hole of FIGURE 6 wherein the adhesive insert anchor of the present invention is being twisted into the hole.

FIGURE 8 is a cut-away partial side view of the hole of FIGURE 7 wherein the adhesive insert anchor of the present invention is being driven into the hole.

FIGURE 9 is a cut-away side view of the hole of FIGURE 8 with the adhesive insert anchor of the present invention fully installed.

FIGURE 10 is a side view of the adhesive insert anchor of the present invention configured with a bolt-in screw member and washer.

FIGURE 11 is a side view of the adhesive insert anchor of the present invention configured with an eyelet fastener head portion.

FIGURE 12 is a side view of the adhesive insert anchor of the present invention configured with an integral male threaded rod, nut and washer.

FIGURE 13 is a side view of the adhesive insert anchor of the present invention configured with an integral hold-down portion.

FIGURE 14 is a side view at the adhesive insert anchor of the present invention including a sleeve and an adhesive tor use in overhead applications.

FIGURE 15 is a side view of the adhesive insert anchor of the present invention including a sleeve and an adhesive being inserted into a hole in a substrate in an overhead application.

FIGURE 16 is a side view of the adhesive insert anchor at the present invention including a sleeve and an adhesive fully inserted into a hole in a substrate in an overhead application.

FIGURE 17 is the adhesive insert anchor of FIGURE 1 modified to include an eccentric wedge portion.

FIGURE 18 is an end view of the bolt of FIGURE 1 showing the tamper-proof sockets.

FIGURE 19 is a side view of a setting tool for securing the bolt of FIGURE 18 into the adhesive insert anchor of the present invention.

FIGURE 20 is a first end view the setting tool of FIGURE 19.

FIGURE 21 is a second end view of the setting tool of FIGURE 19.

FIGURE 22 is a second alternate embodiment adhesive insert anchor including a step on the adhesion segment and channels in the bottom button.

FIGURE 23 is a longitudinal cross-section of the adhesive insert anchor of FIGURE 22 taken along line 23-23 of FIGURE 22.

FIGURE 24 is an end view of the adhesive insert anchor of FIGURE 22 taken along line 24-24 of FIGURE 22 illustrating the channels in the bottom button.

FIGURE 25 Is a side view of a third alternate embodiment of the adhesive insert anchor of FIGURE 1 where the adhesion segment is modified to include a series of frustums.

FIGURE 26 is a longitudinal cross-section of the anchor body of FIGURE 25 taken along line 26-26 of FIGURE 25.

FIGURE 27 is a longitudinal cross-section of the anchor body of FIGURE 25 as installed in a substrate with a screw member threaded in the cavity of the friction segment thereby anchoring a tile to the substrate.

FIGURE 28 is a side view of an alternate embodiment of the adhesive insert anchor of FIGURE 25 where the adhesion segment is modified to include an eccentric wedge.

FIGURE 29 is a side view of an alternate embodiment of the adhesive insert anchor of the present invention where the adhesion segment is modified to include annular rounded ridges.

FIGURE 30 is a longitudinal cross-section of the alternate embodiment of FIGURE 29.

FIGURE 31 is a cut-away view of the alternate embodiment of FIGURE 29 installed in a hole drilled in a substrate.

FIGURE 32 is an isometric view of an alternate embodiment dielectric adhesive insert anchor including an insulator.

FIGURE 33 is a cut-away side view of the dielectric adhesive insert anchor of FIGURE 32 installed in a substrate.

FIGURE 34 is a partial cut-away side view of a dielectric adhesive insert anchor wherein the insulator is threaded onto the anchor body.

FIGURE 35 is a top view of the dielectric adhesive insert anchor of FIGURE 34.

FIGURE 36 is a partial cut-away side view of a dielectric adhesive insert anchor wherein the insulator is press fit onto the anchor body.

### DETAILED DESCRIPTION OF THE PREFERRED EMBODIMENT

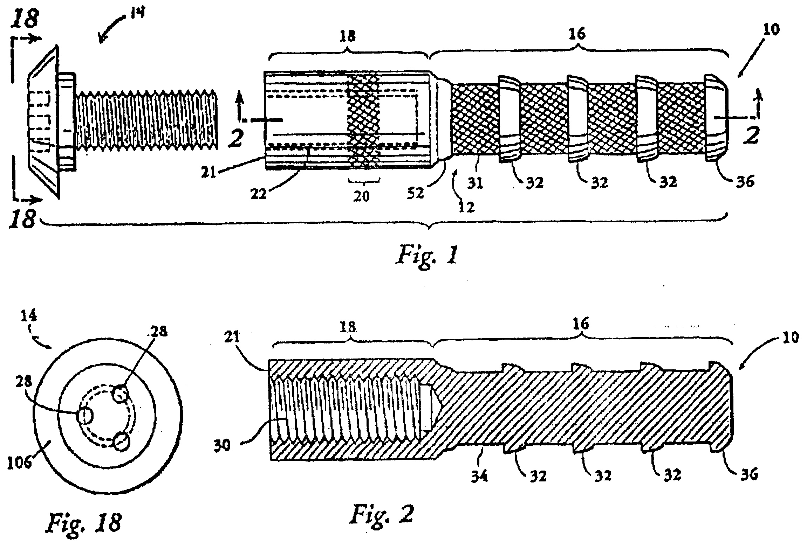

Attention is directed to FIG. 1 which shows the adhesive insert concrete anchor of the present invention **10** which includes an anchor body **12** and a screw member **14**. Anchor body **12** is preferably constructed of carbon steel or stainless steel. Screw member **14** is preferably constructed of carbon steel or stainless steel. It is understood that other suitable materials could be substituted to construct anchor body **12** and screw member **14**. Anchor body **12** includes an integral adhesion segment **16** and friction segment **18**. Anchor body **12** is designed to be inserted into a hole predrilled into a substrate such as concrete with adhesion section **16** inserted first such that the top portion **21** of friction segment **18** is flush with the surface of the substrate.

Screw member **14** includes flathead **24**, spacer **25**, and threaded portion **26**. In the preferred embodiment, flathead **24** includes a plurality of indentions **28** (described below) for receiving a tool used for threading screw member **14** into anchor body **12**. Indentations **28** may be of any desired configuration in order to mate the tool. For example, indentations **28** may be configured with a slot to receive a flathead screwdriver, or perpendicular slots for receiving a phillips head screwdriver, or any other desired configuration.

Adhesion segment **16** includes a plurality of saucer shaped buttons **32** with an outer diameter greater than the outer diameter of the shaft of the adhesion segment **34**. Buttons **32** are rounded, or saucer shaped, such that when the anchor is inserted into a substrate hole containing adhesive, the rounded portion facilitates the flow of adhesive around buttons **32** so that the entire adhesion segment **16** is submerged in adhesive. Buttons **32** include a flat shelf facing friction segment **18**. As anchor **10** is inserted into a substrate hole containing adhesive, the flat shelves of buttons **32** provide greater surface area such that when the adhesive cures, buttons **32** provide resistance against the adhesive to maintain anchor **10** within the substrate hole, thereby contributing to the holding values of anchor **10**.

A terminal button **36** is shaped substantially the same as buttons **32** with the exception that its bottom surface is rounded, forming the terminal end of anchor **10**. This rounded bottom surface of terminal button **36**: 1.) Allows adhesive to flow freely around adhesion segment **16** as adhesion segment **16** is inserted into a substrate hole containing adhesive; and **2**.) Helps prevent stress risers from occurring in the cured adhesive around terminal button **36**.

The number of buttons placed on adhesion segment **142** depends on the length of the anchor. The length and diameter of the anchor is dependent upon the specific application and holding values required. The outer diameter of buttons **32** and terminal button **36** may be equal in size or may decrease in size (not shown) with terminal button **36** having the greatest diameter and the button closest to friction segment **18** having the smallest diameter.

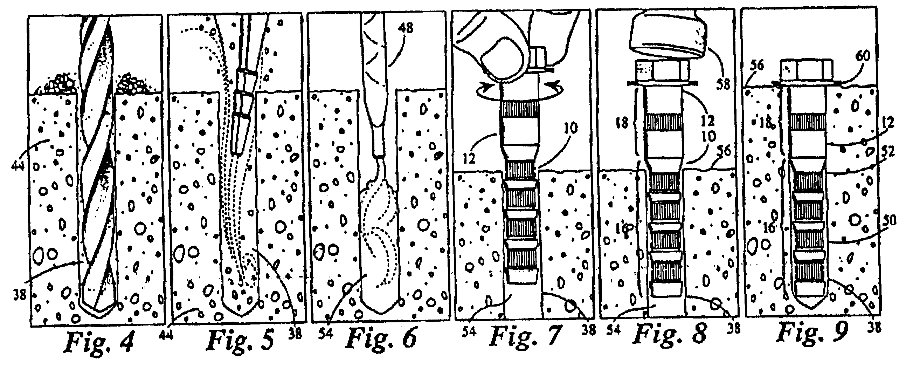

Shaft **34** of adhesion segment **16** is knurled so as to increase the surface area of shaft **34**. When adhesion segment **16** is inserted into a hole containing adhesive, the adhesive enters the crevices formed by the knurling and thereby forms a surface-to-surface bond between shaft **34** and the adhesive. These surface-to-surface bonds increase the holding value of anchor **10**. The knurling could be in many suitable configurations. For example, the knurling shown in FIG. 1 is cross-hatched while the knurling shown in FIGS. 7-9 is vertical.

As can be seen from FIG. 2, buttons **32** as well as terminal button **36** are formed integrally with shaft **34** and friction segment **18** so that anchor **10** is an integral unit containing cavity **30** therein.

Friction segment **18**, FIG. 1, includes an internally threaded cavity **22** therein (shown in phantom) into which screw member **14** is threaded so that screw member **14** may anchor an object into anchor body **12** when anchor body **12** is fixed in a substrate. As can be seen in FIG. 2, a longitudinal cross-section of the anchor body of FIG. 1 taken along line 2-2 of FIG, 1, internally threaded cavity **22** is cut in friction segment **18** substantially the entire length or friction segment **18**. The threads of internally threaded cavity **22** are cut to mate the threads of screw member **14** of FIG. 1 so that screw member **14** may be threaded inside internally threaded cavity **2**2. Screw member **14** can be threaded into internally threaded cavity **22** substantially the entire length of friction segment **18** of anchor body **12** in order to provide effective anchoring potential (holding values).

Referring again to FIG. 1, friction segment **18** is of a diameter substantially the same as the diameter of the hole drilled in the substrate so that when anchor body **12** is inserted into the hole drilled in the substrate, friction segment **18** will friction fit into the hole. The friction fit of friction segment **18** to the walls of the hole in the substrate allow anchor body **12** to be inserted and maintained at a depth in the hole in the substrate so that terminal button **36** of adhesion segment **16** is suspended a predetermined distance from the bottom of the hole drilled in the substrate.

Friction segment **18** includes a knurled segment **20** cut in its circumference. Knurled segment **20** as shown in FIG. 1 is cross hatched; however, it could be a series of parallel grooves cut in the circumference of friction segment **18** or any knurling pattern known in the industry. Knurled segment **20** adds to the frictional forces when anchor body **12** is inserted into the hole drilled in the substrate by scarring the walls of the hole. Additionally, knurled segment **20** resists rotation of anchor body **12** in the hole while screw member **14** is threaded into internally threaded cavity **22**.

Adhesion segment **16** includes an irregular external diameter; however, the external diameter of adhesion segment **16** is smaller than the external diameter of friction segment **18**, even at its points of greatest external diameter. Adhesion segment **16** does not contact the walls of the hole drilled in the substrate. A taper **52** reduces the external diameter of anchor body **12** from friction segment **18** to adhesion segment **16**.

As is described above, adhesive insert anchor **10** provides independent coactive holding capabilities derived from: 1.) the friction fit of friction segment **18** and the substrate, and 2.) the cured adhesive bonding anchor **10** to the substrate. These coactive holding capabilities are found in all of the embodiments discussed herein.

Referring to FIG. 4, installation of the adhesive insert anchor begins with drilling a hole **38** in the substrate **44** to a predetermined depth. Substrate **44** may be any material, such as masonry or rock, but is most commonly concrete. The depth of hole **38** will be greater than the length of anchor body **12** to accommodate a generous amount of adhesive. Hole **38** is then cleaned, FIG. 5, with compressed air and a brush to remove any loose material in hole **38** as a result of drilling. This allows the adhesive to bond property with the walls of hole **38**. The presence of concrete dust resulting from drilling could affect the adhesion between the adhesive and walls of concrete hole **38**. Concrete dust acts as a lubricant in the concrete hole, preventing the adhesive from entering the porosity of the concrete hole. After hole **38** is cleaned, an adhesive is added into hole **38**, FIG. 6. Any adhesive suitable for the application can be used; however, an epoxy available from COVERT OPERATIONS® is highly suitable for this application. The epoxy is mixed with a small static mixing element **48** upon installation. The proper amount of adhesive should be added to hole **38** so that when anchor body **12** is inserted into hole **38**, adhesive will fill the entire space **50**, FIG. 9, between adhesion segment **16** and the walls of hole **38**, all the way to the top of taper **52**. This allows a strong bond between concrete **44** and anchor body **12**.

Once the proper amount of adhesive **54** is added, anchor body **12**, FIG. 7, is twisted into hole **38** to agitate adhesive **54**. Twisting of anchor body **12** provides effective whetting of hole **38** by concrete dust on the walls of hole **38**. This increases the ability of adhesive **54** to attack the porosity of the concrete, providing a better adhesive bond. Twisting of anchor **10** into hole **38** also functions to eliminate or minimize voids in adhesive **54** which may be present such as by air being trapped when the adhesive **54** inserted. Additionally, twisting anchor **10** agitates adhesive **54** in order to ensure thorough mixing such as when the adhesive is epoxy, a two-part mixture, generally of an epoxy and an activator. Anchor **10** is twisted into hole **38** until friction segment **18**, FIG. 8, reaches the surface **56** of concrete **44**. Then, anchor **10** is driven into hole **38** with a hammer **58** or similar instrument. Driving anchor **10** into hole **38** displaces adhesive **54** in hole **38** which fills the entire space **50** between adhesion segment **16** and hole **38**.

It is known in the industry that when an adhesive such as epoxy is used, that the greater its cross-link density, the stronger the adhesive bond. It is also known that cross-link density can be increased by either an increase in cure temperature or an increase in cure pressure. When anchor **10** is driven into hole **38**, adhesive segment **16** is forced into adhesive (epoxy) **54**. A substantial amount of adhesive **54** is added to hole **38** such that once adhesive segment **16** is driven into it, adhesive **54** is placed under pressure. The friction fit between friction segment **18** and hole **38** maintains this pressurized state. The cross-link density of the epoxy is thereby increased. This pressurized state further forces adhesive **54** into the substrate, concrete **44** allowing it to attack the porosity of the concrete **44** as well as any voids which are frequently present. This results in a strong adhesive bond with anchor **10** as well as a strong bond between adhesive **54** and concrete **44**.

Anchor body **12** is driven into hole **38** so that its upper surface **60** is flush with the surface **56** of concrete **44**. The friction fit between friction segment **18** of anchor body **12** and the walls of concrete hole **38** maintains adhesion segment **16** a proper predetermined distance above the bottom of hole **38** so that a substantial amount of adhesive fills space **50**. In addition to maintaining adhesion segment **16** the proper distance from the bottom of hole **38** the friction fit between friction segment **18** and the walls of hole **38** provides light-duty interim loading until the adhesive cures in space **50** around adhesive segment **16**. This light-duty interim loading provides a time savings in that screw member **14** may be inserted through the object to be anchored (**42**) and threaded into internally threaded cavity **22** and thereby anchored by the friction fit of friction segments **18** with the walls of hole **38** while the adhesive around adhesive segment **16** is curing. Quick installation derived from this coactive holding capability is thereby provided. Knurled portion **20** (of FIG. 1) resists the rotation of anchor body **12** within hole **38** when screw member **14** is threaded into cavity **22** before the adhesive is cured.

A tight friction fit between friction segment **18** and the walls of hole **38** also prevents adhesive from being displaced around anchor body **12** so that it leaks around top surface **21** and into cavity **22**. Such adhesive leaks are undesirable because they must be cleaned away, and it is undesirable for screw member **14** to be bonded or prevented from being entirely threaded by adhesive inside cavity **22**. Additionally, leakage prevention provided by the friction fit prevents the object being anchored from being adhesively bonded to concrete **44**.

Depending on the thickness of the object to be anchored (**42**), a spacer **25** (FIG. 1) may be added to screw member **14** between flathead **24** and the concrete. Spacer **25** is an integral part of screw member **14**.

The length and diameter of anchor body **12**, and thereby the depth and diameter of hole **38**, as well as the length and diameter of screw member **14** may be varied, depending upon the desired application, holding value required, and thickness of the object being anchored.

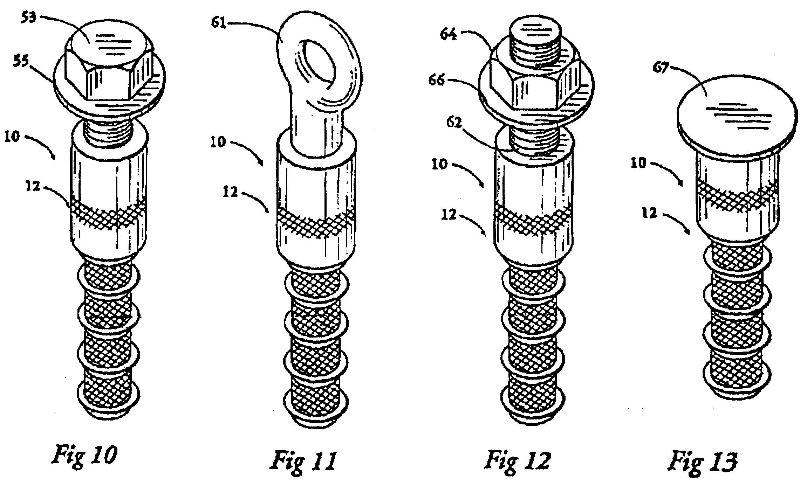

Screw member **14** of FIG. 1, which could be configured in a variety of difference ways or replaced with a variety of head portion configurations, may be integrated with anchor body **12**, thereby eliminating internally threaded cavity **22**. FIG. 10 depicts the adhesive insert anchor **10** wherein screw member **14** is replaced with a threaded bolt **53** and washer **55**. Bolt **53** has threads mating the threads of internal threaded cavity **22** (not shown) so that bolt **53** may be threaded into the internal threaded cavity of anchor body **12**.

FIG. 11 depicts adhesive insert anchor **10** wherein screw member **14** (FIG. 1) is replaced with an eyelet fastener **61**. Eyelet fastener **61** may either include threads which mate the threads of internally threaded cavity **22** (not shown) so that eyelet fastener **61** can be threaded into anchor body **12**, or eyelet fastener **61** may be an integral part of anchor body **12** and thereby fixed thereto (FIG. 11).

FIG. 12 depicts adhesive insert anchor **10** wherein the screw member **14** and internally threaded cavity **22** (of FIG. 1) have been replaced with a male thread rod **62**. Male thread rod **62** is an integral part fixed to anchor body **12** and extending upwardly therefrom. Male threaded rod **62** is threaded so as to receive a threaded nut **64** and washer **66**.

FIG. 13 shows adhesive insert anchor **10** wherein screw member **14** and internally threaded cavity **22** (of FIG. 1) have been replaced by a permanent hold-down head portion **67**. Permanent hold-down head portion **67** is an integral part of anchor body **12** and fixed thereto. The anchor of FIG. 13 would be used where it is desired to have an anchor with a large head portion surface area in which to permanently anchor an object.

The head portion configurations shown in FIGS. 4-7 are for exemplification purposes only, and are not all-inclusive. Adhesive insert anchor **10** could be configured with other head portions, such as a tamper-proof bolt, not depicted herein.

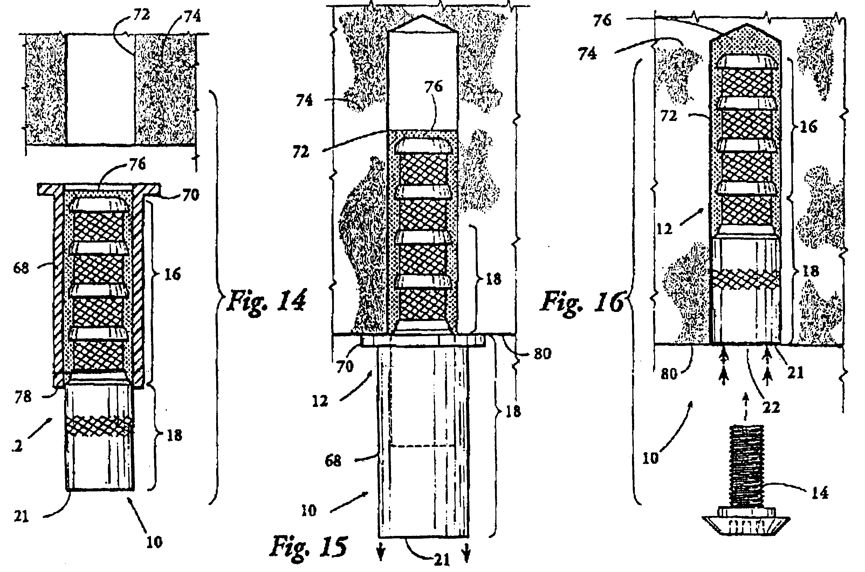

Referring to FIG. 14, adhesive insert anchor **10** may be employed for wall or overhead applications. In an overhead application, anchor body **12** is fitted with a cylindrical sleeve **68**. Sleeve **68** may be constructed of plastic or any other suitable material. Sleeve **68** is removably fitted on anchor body **12** so that it completely covers adhesion segment **16** and has an internal diameter which is substantially the same as the external diameter of friction segment **18** and removably fixes thereon. Sleeve **68** includes an annular flange **70** which is substantially larger than the diameter of friction segment **18**.

Installation of adhesive insert anchor **10** in an overhead application is accomplished by drilling a hole **72** in substrate **74** to a predetermined depth. The depth of hole **72** is again greater than the length of anchor body **12** so as to accommodate a generous amount of adhesive. The diameter of hole **72** is substantially the same as the diameter of friction segment **18**. The hole is then cleaned with compressed air and a nylon brush to remove any loose material in hole **72** as a result or drilling. This allows the adhesive to bond properly with the walls of hole **72**. After hole **72** is properly cleaned, sleeve **68** is fixed on anchor body **12** so that adhesion segment **16** is completely covered. Sleeve **68** is then filled with an adhesive such as epoxy **76** to flange **70** so that adhesion segment **16** is completely immersed in epoxy. Adhesive anchor **10** is then located over hole **72**, and anchor body **12** is twisted by gripping friction segment **18** and pushing adhesion segment **18** into hole **72** until friction segment **18** engages hole **72** (FIG. 15). Surface **21** is struck with a hammer or similar instrument until surface **21** is flush with surface **78** of sleeve **68**. This configuration is shown in FIG. 15 wherein anchor body **12** has been twisted into hole **72** in substrate **74** so that adhesion segment **16** is completely inserted into hole **72**. Since annular flange **70** is of a greater diameter than the diameter of hole **72**, annular flange **70** prevents sleeve **68** from entering hole **72**. Due to the tact that the internal diameter of sleeve **68** is substantially the same as the external diameter of friction segment **18**, pushing friction segment **18** through sleeve **68** forces adhesive **76** into hole **72**. Since the external diameter of friction segment **18** is substantially the same as the diameter of hole **72**, as friction segment **18** extends into hole **72**, it prevents adhesive **76** from leaking from hole **72** such as by gravity. Sleeve **68** is then pulled off of friction segment **18** and discarded. Anchor body **12** is then driven the rest of the way into hole **72** so that surface **20** is flush with the surface **80** of substrate **74**.

FIG. 16 depicts anchor body **12** completely inserted into hole **72** in substrate **74** so that surfac**e 21** is flush with surface **80** of substrate **74**. When anchor body **12** is completely inserted, friction segment **18** pushes adhesive **76** to the end of hole **72** so that adhesive **76** completely surrounds adhesion segment **16**, thereby providing a bond between adhesion segment **16** and substrate **74**. Friction segment **18** prevents adhesive **76** from leaking out of hole **72** before curing. Friction segment **18** also provides light-duty interim loading of anchor **10** when screw member **14** is threaded into internally threaded cavity **22** (shown in phantom). Upon curing of epoxy **76**, anchor body **12** is held in hole **72** both by epoxy **76** bonding adhesion segment **18** to substrate **74** and by friction segment **18** being friction fit with the walls of hole **72**.

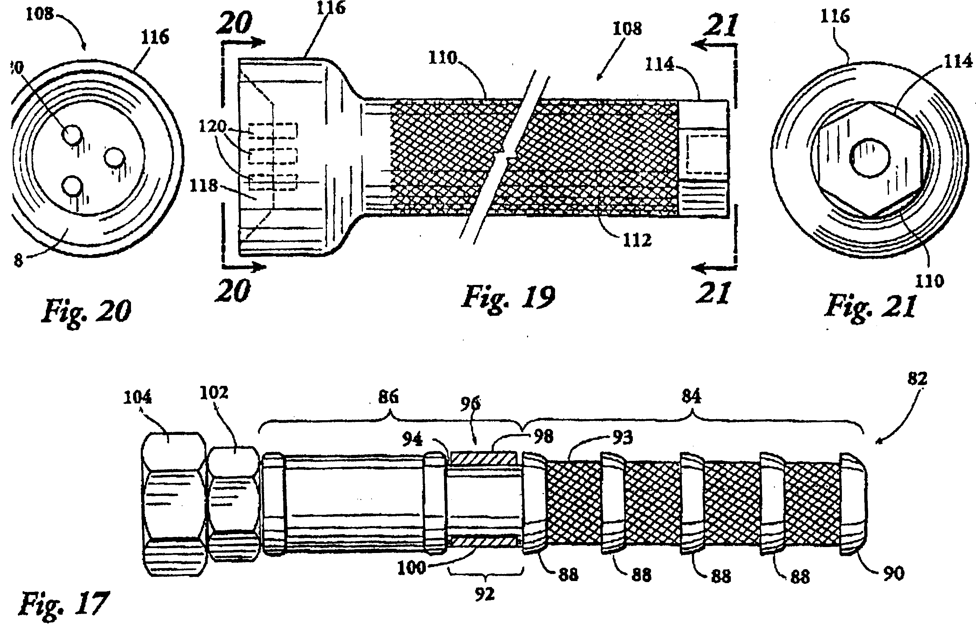

Referring to FIG. 17, the anchor of FIG. 1 could be modified to include an eccentric ring. Anchor **82** includes a plurality of buttons **88**, a terminal button **90**, and adhesion segment **84** substantially the same as adhesion segment **16** of anchor **10** (FIG. 1). Friction segment **86** of anchor **82** includes an eccentric portion **92**. Eccentric portion **92** includes a cylindrical section **94** and an eccentric ring **96**. The longitudinal axis of cylindrical section **94** is not the same as the longitudinal axis of shalt **93** of adhesion segment **84**. Eccentric ring **96** is of a crescent shape in cross-section. Fig. 17 shows eccentric ring **96** partially cut away to illustrate its variable thickness. Middle (cut-away) **98** has a greater thickness than end **100** so that when anchor **82** is installed in a substrate hole and anchor **82** rotated by rotating nut **102**, middle **98** of eccentric ring **96** extends beyond the outer diameter of friction segment **86** and engages the wall of the substrate hole, thereby wedging anchor **82** in the substrate hole. Once wedged, anchor **82** provides interim light-duty loading during cure of the adhesive and maintains adhesion segment **84** a predetermined distance from the bottom of the substrate hole. Bolt **104** is then threaded into the cavity in friction segment **86** to anchor an object. Nut **102** is a breakaway nut designed to break off at a predetermined torque such that sufficient torque can be maintained on anchor **82** to set eccentric portion **92** to wedge anchor **84** in the substrate hole. Nut **102** is then designed to break off once eccentric portion **92** is set. Bolt **104** is then used to anchor a member to anchor **82**. Installation of anchor **82** is the same procedure as installation of anchor **10** as shown in FIGS. 4-9 above

FIG.18 depicts screw member **14** configured with a tamper-proof head **106**. In certain applications it is necessary to install a screw, member having a tamper-proof head in order to prevent unauthorized removal of the screw member and subsequently, the object being anchored. Screw member **14** includes a tamper-proof head **106** containing tamper-proof sockets **28**. Tamper-proof sockets **28** are configured in such a manner to mate a setting tool (**108** of FIG. 19). In order to install or remove tamper-proof screw member **14**, one must have a setting tool **108** that mates screw member **14**.

FIG. 19 shows setting tool **108** which includes a first end **116**, shaft **110**, and a second end **114**. First end **116** has an indented portion **118** (shown in phantom). Indent **118** includes three prongs **120** which are press-fit into first end **116**. Indent portion **118** and prongs **120** make tamper-proof head **106** and sockets **28** of screw member **14** (FIG. 18) so that when mated, setting tool **108** is used to thread, and remove, screw member **14** into/from anchor **10** (FIG. 1). Although tamper-proof head **106** and first end **116** of setting tool **108** are configured with three sockets **28** and three prongs **120** respectively, it is understood that the number and shape of mating sockets and prongs could vary substantially without departing from the spirit and scope of a tamper-proof arrangement.

FIG. 20, a view taken along line 20-20 of FIG. 19, depicts first end **116** of setting tool **108**. Prongs **120** are shown recessed in indent **118** to receive tamper-proof head **106** of screw member **14** which includes mating sockets **28**. Prongs **120** are constructed of rolled steel and press-fit into first end, however, it is understood that pins would be a suitable alternative.

Referring back to FIG. 19, shaft **110** of setting tool **108** is of a length so as to be gripped by a person's hand. Shaft **110** includes knurling **112** thereon so as to facilitate a person's grip.

Second end **114** of setting tool **108** includes an integral hex fitting to receive a socket, end, or crescent wrench so as to allow increased torque on setting tool **108** in order to thread or remove screw member **14**. FIG. 21 is a view taken along line 21-21 of FIG. 20 shows second end **114** with integral hex fitting.

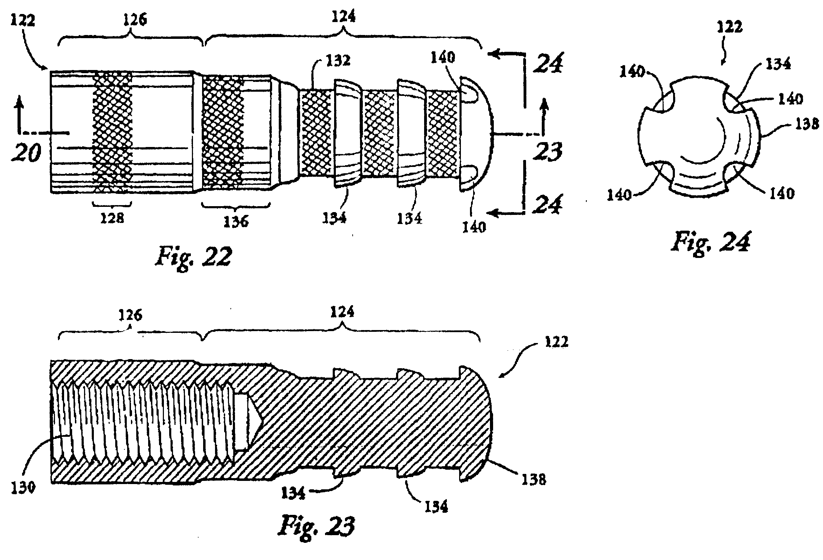

FIG. 22 depicts a second alternate embodiment adhesive insert anchor **122**. Anchor **122** includes an adhesion segment **124** and a friction segment **126**. As with the previous embodiments, friction segment **126** includes a knurled portion **128**.

FIG. 23, a longitudinal cross-section taken along line 23-23 of FIG. 22, shows anchor **122** containing an internal cavity **130** drilled within friction segment **126**. Cavity **130** is threaded to receive a threaded bolt. Anchor **122** could also be configured to receive any or the head configurations depicted in FIGS. 10, 11, 12, 13, or other suitable configuration as required by the installation application.

Referring again to FIG. 22, adhesion segment **124** includes a plurality of saucer-shaped buttons **134** with an outer diameter greater than the outer diameter of the shaft **132** of the adhesion segment **124**. Buttons **134** are rounded or saucer-shaped, such that when the anchor is inserted in the substrate hole containing adhesive, the rounded portion facilitates the flow of adhesive around buttons **194** so that the entire adhesion segment **124** is submerged in adhesive. Buttons **134** include a flat shelf which faces friction segment **126**. As anchor **122** is inserted into a substrate hole containing adhesive, the flat shelves of buttons **134** provide greater surface area such that when the adhesive cures, buttons **134** provide resistance against the adhesive to maintain anchor **122** within the substrate hole, thereby contributing to the holding value of anchor **122**.

Adhesion segment **124** of anchor **122** may include a step **136**. The outer diameter of step **136** is greater than the outer diameter of shaft **132** but less than the outer diameter of friction segment **126**.

The terminal button **138** of adhesion segment **124** is larger in diameter than buttons **134** so as to provide added surface area projecting outwardly from shaft **132** to be encompassed by and in contact with the adhesive. Terminal button **138** includes a plurality of channels, collectively **140** cut in its circumference. Channels **140** are cut in the circumference of terminal button **138** so as to facilitate and promote the movement of adhesive around terminal buttons **138** and upwardly onto shaft **132** and shelf **136** so as to completely encompass adhesion segment **124** when anchor **122** is inserted into a substrate hole containing adhesive.

FIG. 24, an end view of anchor **122** taken along line 24-24 of FIG. 22, shows the manner in which channels **140** are cut in terminal button **138**. FIG. 24 also shows the respective diameters of terminal button **138** and buttons **134**. Anchor **122**, is installed in substantially the same manner as anchor **10**, described above.

Anchor **122** could also be modified with an eccentric portion on friction segment **126** in order to convert anchor **122** into an eccentric wedge adhesive anchor. Additionally, anchor **122** could be fitted with a sleeve and installed in overhead applications such as is shown and described in FIGS. 14, 14, and 16.

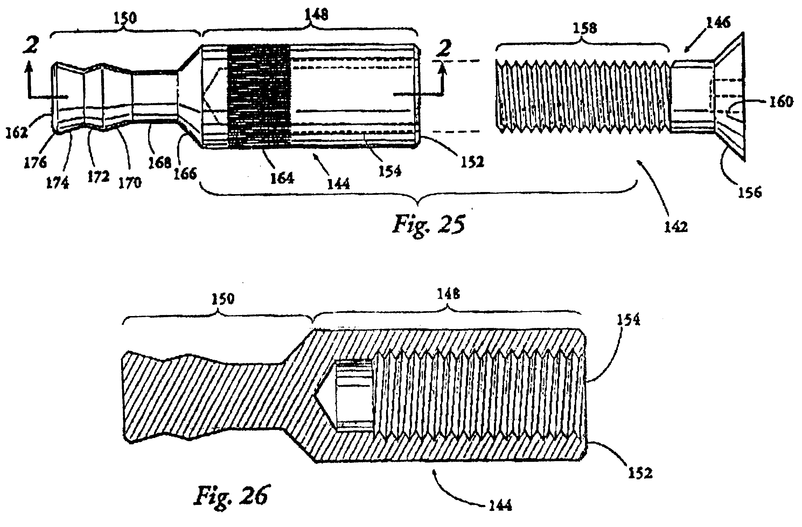

FIGURE 25 shows a third alternate embodiment adhesive insert anchor **142**. Anchor **142** includes an adhesion segment **148** and a friction segment **150.** Friction segment **150** contains a knurled portion **152** to score the inside of the substrate hold in order to increase the surface area in contact with the substrate hole to increase the frictional forces between the two surfaces. This increase in frictional forces provides increased holding values for anchor **142** against being pulled from the hole. It also provides resistance against rotational forces to keep the anchor from rotating in the hole as the anchor is placed under load.

Screw member **146** includes flathead **156**, spacer **159**, and threaded portion **158**. Flathead **156** includes an indentation **160** for receiving a tool used for threading screw member **146** into anchor body **144**. Indentation **160** may be of any desired configuration in order to make the tool. For example, indentation **160** may be configured with a slot to receive a flathead screwdriver, or perpendicular slots for receiving a phillips head screwdriver, or any other desired configuration.

Adhesion segment **150** is a solid member and includes in series a cylindrical section **168** and four frustums **170**, **172**, **174**, and **176**. The first two frustums **170** and **172** are positioned such that the first frustum **170** is positioned so that its truncated end is coupled with and of the same diameter as cylindrical section **168**, and its base is coupled with and of the same diameter as the base of the second frustum **172**. The second frustum **172** has its base in contact with the first frustum **170** and its truncated end coupled with and of the same diameter as the truncated end of the third frustum **174**. The third frustum **174** is positioned with its truncated end connected to the second frustum **172** and its base coupled with and of the same diameter as the fourth frustum **176**. The fourth frustum is positioned with its base coupled with the base of the third frustum **174** and its truncated end defining the terminal end **162** of adhesion segment **150** of anchor body **144**. The fourth frustum **176** has a small length when compared to the first, second, and third frustums **170**, **172**, and **174**. This small length frustum is designed to resist the occurrence of stress risers in the cured adhesive when anchor **142** is placed under a load.

FIGURE 26, a longitudinal cross-section taken along line 26-26 of FIG. 25 shows anchor **142** with internal cavity **160** drilled within friction segment **150**. Cavity **160** is threaded to receive a threaded bolt, as shown in FIGURE 27. Anchor **142** could also be configured to receive any of the head configurations depicted in FIGURES 10, 11, 12, 13, or other suitable configuration as is required by the installation application.

FIG. 27 is a longitudinal cross-section of anchor body **144** of FIG. 25 as installed in a substrate **178** with screw member **146** threaded in internally threaded cavity **154** of friction segment **148**. Adhesive insert anchor **142** is shown anchoring tile **180** to substrate **178**. As necessary, screw member **146** may be unscrewed from anchor body **144** such as for repair or replacement of tile **180** or for repair of concrete **178**.

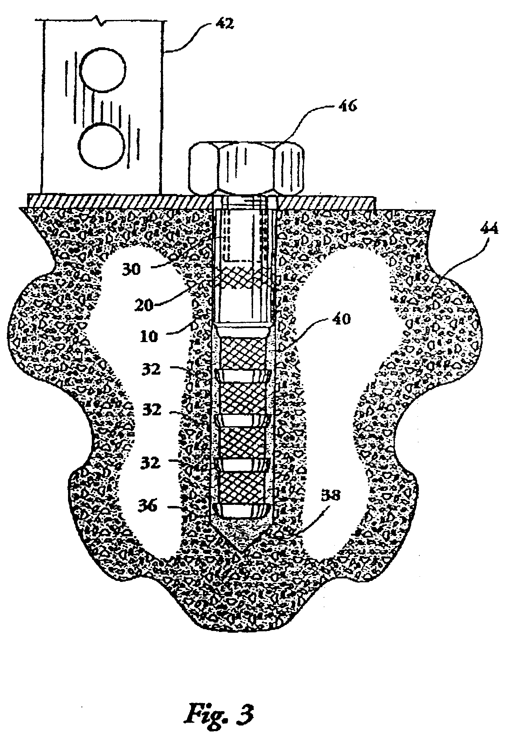

Installation of anchor **142** is substantially the same as installation of anchor **10** of FIG. 3 described above (FIGS. 4-9) and begins with drilling hole **184** in subsate **178** to a predetermined depth. The depth of hole **184** is greater than the length of anchor **142** to accommodate a generous amount of adhesive. Hole **184** is then cleaned with compressed air and a brush to remove any loose material in hole **182** as a result of drilling. After hole **182** is cleaned, adhesive is added to hole **182**. The proper amount of adhesive should be added to hole **182** so that when anchor body **142** is inserted into hole **182**, the adhesive, or epoxy, fills the entire space **184** between the adhesion segment of anchor **142** and the walls of hole **184**.

Once the proper amount of adhesive is added, anchor **142** is twisted into hole **182** so that the adhesive within hole **182** is agitated and displaced until friction segment **148** enters hole **182**. Anchor body **144** is then driven into hole **182** so that its top surface **152** is flush with the surface of substrate **178**. Adhesive fills the entire space between adhesion segment **150** of anchor **142** and hole **182**. Anchor **142** is driven in the hole so that the upper surface of friction segment **148** is flush with the surface of substrate **178**. The friction fit between friction segment **148** of anchor **142** and the walls of the substrate hole **182** maintain adhesion segment **150** a predetermined distance above the bottom of hole **182**. Additionally, the friction fit provides light-duty interim loading until the adhesive cures around the adhesion segment **148**.

Depending on the thickness of the object to be anchored (tile **180**), a spacer **159** (also in Fig. 25) may be added to screw member **14** between flathead **156** and concrete **178**. Spacer **159** allows screw member **146** to be tightened against it instead of against tile **180** which may otherwise damage or distort tile **180**. Spacer **159** may be constructed of any suitable material such as plastic, metal, or rubber. The length and diameter of anchor body **144**, and thereby the depth of hole **182**, as well as the length and diameter of screw member **156** may be varied, depending upon the desired application, holding valve required, and thickness of the object being anchored.

After anchor **142** is installed in hole **182**, tile **180** may be placed over hole **182**, a screw **146** placed through tile **180** and threaded into the internal cavity **154** of anchor **142**. Tile **180** is now anchored to substrate **178**. Screw **146** can be threaded into cavity **154** while adhesive is curing around adhesion segment **150** of anchor **142** due to the interim loading capability of anchor **142**. The knurled portion of friction segment **148** resists rotation of anchor **142** while screw **146** is tightened in cavity **154**. Quick installation due to its coactive holding capability is thereby provided by anchor **142**.

Anchor **142** of FIG. 27 could also be modified for overhead applications through the addition of a sleeve (not shown) around adhesion segment **150**. Installation of anchor **142** in overhead applications would be substantially the same as shown in FIGS. 14, 15, and 16, and the description relating thereto. The sleeve would be modified from that shown in Figs. 14, 15, and 16, however, to accommodate for the length of adhesion segment **150** of anchor **142**.

FIG. 28 is a fourth alternate embodiment of the adhesive insert anchor of the present invention. Anchor **186** is substantially the same as anchor **142** of FIG. 25 with the exception of the addition of an eccentric ring or wedge **202**. Friction segment **190** of anchor **186** is substantially the same as friction segment **148** of anchor **142** of FIG. 25, including a knurled portion **192** and an internally threaded cavity **196** (shown in phantom) for receiving a threaded screw member such as screw member **146** of FIG. 25. Friction segment **190** frictionally engages the walls of hole **204** of substrate **206**. Adhesion segment **194**, however, is modified to include an eccentric ring or wedge **202**. Cylindrical section **198** of adhesion segment **194** has been modified on anchor **186** so that the longitudinal axis of cylindrical section **198** is not the same as longitudinal axis of anchor body **188**. An integral annular ring **200** has been added to adhesion segment **194** to provide a slot for receiving an eccentric ring or wedge **202** on cylindrical section **198**. Eccentric ring **202** is of a crescent shape in vertical cross-section. Eccentric ring **202** is shown cut-away in FIG. 28 to illustrate its varying thickness. Middle **216** (shown cut-away) has a greater thickness than end **218**. Adhesion segment **194** of anchor **186** includes four frustums **208**, **210**, **212**, and **214** just as anchor **142** of FIG 25.

Upon installation of anchor **186**, hole **204** is drilled in substrate **206**. Hole **204** is then cleaned with compressed air and a brush to remove particles and residue left from the drilling of hole **204**. A generous amount of adhesive **220** is then inserted into hole **204**. Anchor body **188** is twisted into hole **204** to agitate adhesive **218**. Twisting anchor body **188** provides effective whetting of hole **204** by disrupting concrete dust on the walls of hole **204**. This increases the ability of adhesive **220** to attack the porosity of substrate **206**. Anchor **186** is twisted into hole **204** until friction segment **190** enters hole **204**. Anchor body **188** is then driven into hole **204** so that adhesion segment **194** displaces adhesive **220** completely surrounding adhesion segment **194**. A threaded member is then threaded entirely into cavity **196**, rotational force is exerted so that the frictional forces between frictional segment **190** and the walls of hole **204** are overcome, and anchor body **188** is rotated within hole **204** so that eccentric ring **202** contacts wall **204** and thereby wedges or cams against the walls of hole **204**. Eccentric ring **202** must be set prior to the curing of adhesive **218**; otherwise, adhesive **220** will prevent anchor body **188** from rotating. Once eccentric ring **202** is set and adhesive **120** is cured, substantial holding values are provided by the friction fit of friction setment **190** against the walls of hol**e 204**, the wedging forces produced by the camming action of eccentric ring **202** against the walls of hole **204**, and the bond produced by adhesive **220** between adhesion segment **194** and substrate **206**.

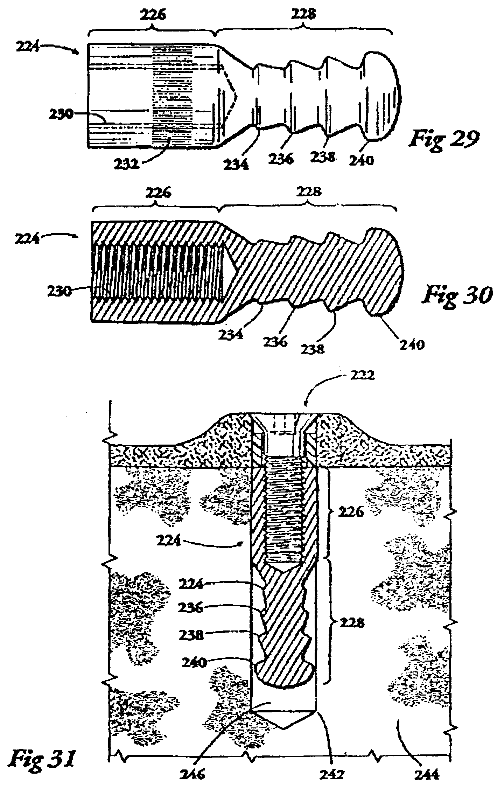

FIG. 29 shows a fifth alternate embodiment of the adhesive insert anchor of the present invention wherein the adhesion segment has been modified. Anchor body **224** includes friction segment **226** and adhesion segment **228**. Friction segment **226** is the same as friction segment **148** of FIG. 25, including internally threaded cavity **230** (shown in phantom) and knurled portion **232**.

FIG. 30, a longitudinal cross-section of anchor body **224** of FIG. 29, shows internally threaded cavity **230** within frictional segment **226**.

Referring back to FIG. 29, adhesion segment **228** of anchor body **224** includes a series of annular rounded ridges **234**, **236**, **238**, and a rounded terminal end **240**. It is understood that anchor body **224** could include a greater or fewer number of annular rounded ridges than those shown in FIG. 29. The diameters of the annular rounded ridges increase as they approach rounded terminal end **240**. For example, the diameter of annular rounded ridge **236** is greater than the diameter of annular rounded ridge **234**. Likewise, the diameter of annular raised ridge **238** is greater than the diameter of annular rounded ridge **236**. Finally, the diameter of rounded terminal end **240** is greater than the diameter of annular rounded ridge **238**. The increasing diameters facilitate the movement of adhesive along adhesion segment **228** when anchor body **224** is inserted into a hole filled with adhesive.

For example, an anchor may be constructed wherein:
Diameter of annular ridge **234** is 0.605",
Diameter of annular rounded ridge **236** is 0.680"
Diameter of annular rounded ridge **238** is 0.710"
Diameter of rounded terminal end **240** is 0.750"

Referring to FIG. 31, hole **242** has been drilled in substrate **244**, and a generous amount of adhesive has been placed in space **246** of hole **242**. Referring to FIG. 31, installation of the fifth alternate embodiment adhesive insert anchor **222** is the same as the installation procedure for the installation of adhesive insert anchor **142** having the preferred embodiment as described in relation to FIG. 27. When anchor body **224** is driven into hole **242** so that adhesion segment **228** displaces the adhesive in space **246**, adhesive can easily fill the entire space between adhesion segment **228** and the walls of hole **242** in order to provide a proper bond upon curing of the adhesive. Annular rounded ridges **234**, **236**, and **238**, as well as rounded terminal end **240**, are rounded so as to resist the appearance of stress risers in the adhesive after it cures, while still providing substantial surface area to increase holding values.

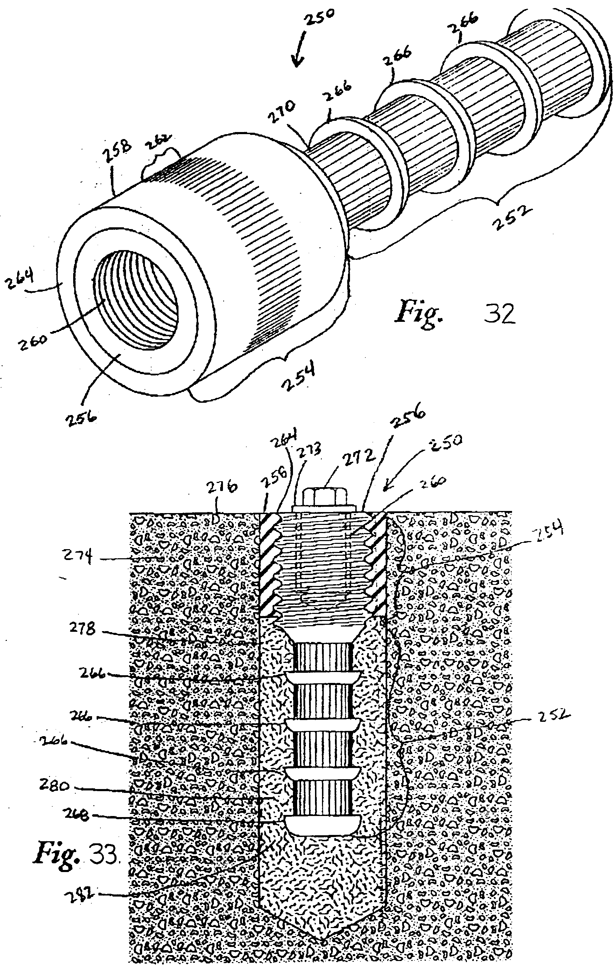

Referring next to FIG. 32, an alternate embodiment adhesive insert anchor **250**. Anchor **250** includes an adhesion segment **252** and a friction segment **254**. Anchor body **256** of anchor **250** is fitted with an insulator **258**. Insulator **258** is constructed of material known to have electrical insulating properties. Materials known to be suitable electric insulators are suitable for insulator **258**. Examples of suitable materials include nylon, polyvinyl chloride (PVC), and fiberglass tubing. However, many other suitable electrically non-conductive materials are commercially available.

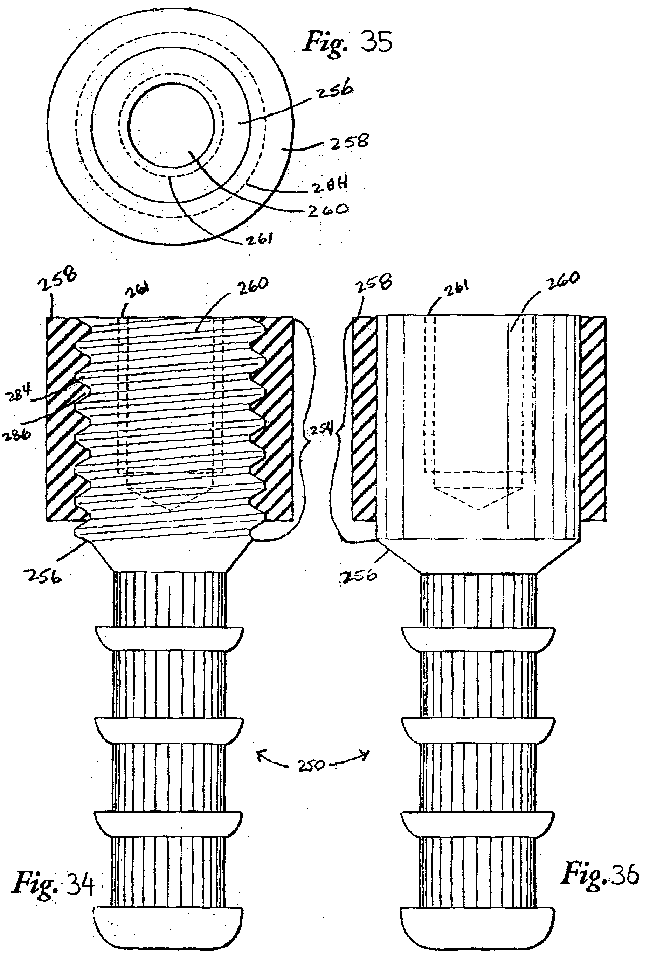

Insulator **258**, when fitted onto anchor body **256** forms friction segment **254** of anchor **250**. Insulator **258** forming friction segment **254**, as can be seen also in FIG. 33, is the portion of anchor **250** which contacts substrate **274**. Insulator **258** being the friction segment **254** which contacts substrate **274** and being constructed of electrically non-conductive material electrically insulates anchor **250** from substrate **274**. Adhesion segment **252** is spaced from substrate **274** by adhesive **280.** Many adhesives presently used commercially, such as epoxy, are electrically non-conductive. Thereby, adhesion segment **252** is electrically insulated from substrate **274** by adhesive **280** wherein adhesive **280** completely fills the area **282** between adhesion segment **252** and the walls of hold **278** in substrate **274**.

Anchor body **256** is a unitary piece of material extending from top surface **264** of friction segment **254** underneath insulator **258** and terminates with terminal button **268** of adhesion segment **252**. Suitable materials for the construction of anchor body **256** include stainless or carbon steel, although other materials of similar tensile strength may be substituted.

Referring back to FIG. 32, anchor body **256** includes an internally threaded cavity **260** which extends substantially the entire length of friction segment **254**. Internally threaded cavity **260** is threaded to receive a mating threaded bolt, such as bolt **272** of FIG. 33. Bolt **272** when threaded into internally threaded cavity **260** is used to fasten an object to anchor **250**, and thereby substrate **274**. Threaded bolt **272** could be replaced with a variety of head portion configurations such as those depicted in FIGS. 10-12. Anchor **250** could also be adapted with a tamper-proof system as described above. Internally threaded cavity **260** could also be eliminated and a variety of head portion configurations machined onto anchor body **256**, such as a threaded rod, FIG. 12, or a permanent hold-down, FIG. 13, depending on the required application of anchor body **250**.

The object to be fastened to anchor **250** may be spaced from the top surface **264** of friction segment **254** by an electrically non-conductive washer **273** so as to bolt **272** from the object to be fastened to anchor **250**. Electrically insulated washer **273** could be substituted with other electrically insulated spacers used in the industry as required for a particular anchor application.

Insulator **258** may include a knurled portion **262**, Fig. 32, to supplement the friction fit between friction segment **254** and substrate **274**. Knurled portion **262** resists the rotation of anchor body **256** within hole **278** when bolt **272** is threaded into internally threaded cavity **260** before adhesive **280** is cured.

Insulator **258** of friction segment **264** includes means for securing insulator **258** to anchor body **256**. Referring to FIGS. 34-36, means for securing insulator **258** to anchor body **256** could include threading insulator **258** onto anchor body **256**, as shown in FIG. 34, or press fitting insulator **258** onto anchor body **256**, as shown in FIG. 36.

Referring to FIG. 34, anchor body **256** includes external threads **284** machined onto friction segment **254**. Insulator **258** is internally threaded with threads **286**. Threads **286** mate threads **284** so that insulator **258** may be threaded onto anchor body **256**.

Threads **284** and **286** prevent epoxy from escaping between anchor body **256** and insulator **258** when anchor **250** is installed into a hole in a substrate containing epoxy (FIG. 33).

FIG. 35 is a top view of FIG. 34 which shows insulator **258** threaded onto anchor body **256** by threads **284** (shown in phantom). Insulator **258** is threaded onto anchor body **266** so that there is no gap, or space, between anchor body **256** and insulator **258** so as to prevent adhesive from escaping and possibly entering internally threaded cavity **260**. Threads **261** of internally threaded cavity **260** are shown in phantom.

Referring to FIG. 36, means for fitting insulator **258** onto anchor body **256** may also include sliding insulator **258** onto anchor body **256**, thereby eliminating threads **284** and **286** (of FIG. 34). The cost of machining threads onto anchor body **256** and into insulator **258** is thereby eliminated. It is desired, however, to obtain a tight fit between insulator **258** and anchor body **256** in order to prevent adhesive from escaping between insulator **258** and anchor body **256**. Accordingly, it may be desirable to press fit insulator **258** onto anchor body **256**. Additionally, if a resilient material such as nylon is used for insulator **258**, insulator **258** may be heated prior to being press fit onto anchor body **256** so as to obtain a secure bond between anchor body **256** and insulator **258**.

Referring back to FIGS. 32 and 33 adhesion segment **252** is identical to adhesion segment **16** described above. Adhesion segment **252** includes a plurality of buttons **266** and terminates with a terminal button **268**. Button **268** forms the terminal end of anchor **250**.

Shaft **270** of adhesion segment **252** includes knurling thereon in the portions of shaft **270** between buttons **266**. This knurling increases the surface area of shaft **270**. When adhesion segment **252** is inserted into a hole containing adhesive, the adhesive enters the crevices formed by the knurling and thereby forms a surface-to-surface bond between shaft **270** and the adhesive. These surface-to surface bonds increase the holding value of anchor **250**. As discussed above, the knurling could be in many suitable configurations.

Installation of anchor **250** of FIG. 33 is substantially the same as installation of anchor **10** as described above in FIGS. 4-9 and begins with drilling hole **278** in substrate **274** to a predetermined depth. The depth of hole **278** is grater than the length of anchor **250** to accommodate a generous amount of adhesive. Hole **278** is then cleaned with compressed air and a brush to remove any loose material in hole **278** as a result of drilling. After hole **278** is cleaned, adhesive is added to hole **278**. The proper amount of adhesive should be added to hole **278** so that when anchor **250** is inserted into hole **278**, the adhesive, or epoxy, fills the entire area **282** between adhesion segment **252** of anchor **250** and the walls of hole **278**. If adhesive **280** is non-conductive, such as epoxy, adhesive segment **252** is electrically insulated from substrate **274**.

Once the proper amount of adhesive is added, anchor **250** is twisted into hole **278** until friction segment **254** contacts hole **278**. Twisting anchor **250** agitates and displaces adhesive **280** in hole **278**. Anchor **250** is driven into hole **278** so that the top surface **264** of friction segment **254** is flush with the surface **276** of substrate **274**. Adhesive fills the entire area **282** between adhesion segment **252** and hole **278**. The friction fit between friction segment **254** of anchor **250** and the walls of the substrate hole **278** maintain adhesion segment **252** a predetermined distance above the bottom of hole **278**. Additionally, the friction fit provides light-duty interim loading until the adhesive cures around the adhesion segment **252**.

Since insulator **258** contacts substrate **274** and not anchor body **256**, anchor body **256** is electrically insulated from substrate **274**. Insulator **258** maintains the friction fit between anchor **250** and substrate **274** as well as electrically insulates anchor **250** from substrate **274**.

After anchor **250** is installed in hole **278**, an object to be fastened to anchor **250**, such as a railroad tie, may be placed over hole **278**. Bolt **272** is inserted through the railroad tie and threaded into internal cavity **260** of anchor **250**. The railroad tie is now anchored to substrate **274**. Insulated washer(s) **273** electrically insulate anchor **250** from the railroad tie, as discussed above. Bolt **272** can be threaded into cavity **260** while adhesive **280** is curing around adhesion segment **252** due to the interim loading capability of anchor **250**. Knurled portion **262** of insulator **258** on friction segment **254** resists rotation of anchor **250** while bolt **272** is tightened in cavity **260**. Quick installation due to coactive holding capability is thereby provided by anchor **250**.

Dielectric adhesive insert anchor **250** may be used to replace cast-in-place anchors which pull out of the substrate. First, a dielectric adhesive insert anchor **250** is obtained with a friction segment **254** having a larger outer diameter than the hole in the substrate where the cast-in-place anchor was removed. The hole in the substrate is then drilled to the larger diameter of dielectric adhesive insert anchor **250**. The hole is then cleaned and dielectric adhesive insert anchor **250** is installed using the procedure discussed above.

Anchor **250** of FIG. 33 could also be modified for overhead applications through the addition of a sleeve (not shown) around adhesion segment **252**. Installation of anchor **250** in overhead applications would be substantially the same as shown in FIGS. 14, 15, and 16, and the description relating thereto. The sleeve would be modified from that shown in FIGS. 14, 15, and 16, however, to accommodate for the length and diameter of adhesion segment **262** of anchor **250**.

Three dielectric adhesive insert anchors constructed as described herein with insulator **258** threaded onto anchor body **256** were installed in concrete as described above with epoxy as the adhesive. After the epoxy had been allowed to cure (approximately 72 hours), the anchors were pulled from the concrete. The holding values of the three test anchors were:
1.) 42,000 lbs.
2.) 45,500 lbs.
3.) 45,500 lbs.
with the average being 44,333 lbs.

While the invention has been described with a certain degree of particularity, it is manifest that many changes may be made in the details of construction without departing from the spirit and scope of this disclosure. It is understood that the invention is not limited to the embodiment set forth herein for purposes of exemplification, but is to be limited only by the scope of the attached claim or claims, including the full range of equivalency to which each element thereof is entitled.

## Claims

1. An adhesive insert anchor for retaining an object against a substrate, said adhesive insert anchor being inserted within a hole defined in said substrate, said hole having a diameter, comprising:
- an anchor body including a friction segment having an outer diameter and an adhesive segment having an outer diameter wherein the outer diameter of said friction segment is greater than said outer diameter of said adhesive segment;
- said outer diamter of said friction segment being substantially the same as the diameter of the hole so that when said adhesive insert anchor is secured within the hole, said friction segment friction fits against the substrate thereby securing said anchor body in the hole and suspending said adhesive segment at a predetermined depth.

2. The adhesive insert anchor of claim 1 wherein said adhesive is placed in the hole prior to inserting said adhesive insert anchor such that said adhesive segment is immersed in the adhesive which bonds said adhesive segment to the substrate once cured.

3. The adhesive insert anchor of claim 2 wherein said friction segment prevents the adhesive from being displaced from the hole when said adhesive insert anchor is inserted.

4. The adhesive insert anchor according to one of the claims 1 to 3 wherein said friction segment includes an internally threaded cavity extending substantially through its entire length.

5. The adhesive insert anchor of claim 4 further including a screw having threads which mate the threads of said internally threaded cavity.

6. The adhesive insert anchor according to one of the claims 1 to 5 wherein said adhesive segment includes:
- a shaft;
- at least one button positioned on said shaft.

7. The adhesive insert anchor of claim 6 wherein said anchor body includes a terminal end formed by a terminal button on said adhesive segment.

8. The adhesive insert anchor of claim 7 wherein each said button is formed integrally with said shaft and saucer shaped defined by a rounded portion facing said terminal button and a flat shelf facing said friction segment.

9. The adhesive insert anchor of claim 7 or 8 wherein said adhesive segment further includes an eccentric portion positioned on said shaft, further comprising:
a cylindrical portion having at longitudinal axis which is different from the longitudinal axis of said shaft
an eccentric ring secured on said cylindrical portion.

10. The adhesive insert anchor of claim 8 or 9 wherein said adhesive segment includes a step between said friction segment and said shaft.

11. The adhesive insert anchor according to one of the claims 8 to 10 wherein said terminal button includes at least one channel cut therein.

12. The adhesive insert anchor according to one of the claims 1 to 11 wherein said adhesive segment includes:
a first end and a terminal end;
a taper coupled to said friction segment and defining said first end of said adhesive segment;
a cylindrical section coupled to said taper;
a first, second, third, and fourth frustrum each including a base and a truncated end;
the truncated end of the first frustrum coupled to said cylindrical section;
the base of said first frustrum coupled to the base of said second frustrum;
the truncated end of said second frustrum coupled to the truncated end of said third frustrum;
the base of said third frustrum coupled to the base of said fourth frustrum;
the truncated end of said fourth frustrum defining the terminal end of said adhesive section.

13. An adhesive insert anchor, comprising:
an anchor body including an adhesive segment and a friction segment wherein said adhesive segment is integral with said friction segment;
said adhesive segment including a longitudinal shaft with a plurality of buttons positioned along its length;
said shaft having an outer diameter and said buttons each having an outer diameter wherein the outer diameter of each button is greater than the outer diameter of said shaft;
said friction segment having an outer diameter;
said outer diameter of said friction segment being greater than said outer diameter of each of said buttons.

14. The adhesive insert anchor of claim 13 wherein said friction segment includes an internally threaded cavity extending substantially the entire length of said friction segment from one end thereof.

15. The adhesive insert anchor of claim 14 further including a screw threaded into said internally threaded cavity wherein said screw having threads mating the threads of said internally threaded cavity.

16. The adhesive insert anchor according to one of the claims 13 to 15 wherein said anchor body includes a terminal end formed by a terminal button an said adhesive segment.

17. The adhesive insert anchor of claim 16 wherein each said button is formed integrally with said shaft and is saucer shaped defined by a rounded portion facing said terminal button and a flat shelf facing said friction segment.

18. The adhesive insert anchor according to one of the claims 13 to 17 wherein said friction segment contains knurling thereon.

19. The adhesive insert anchor according to one of the claims 13 to 18 wherein said shaft is knurled along its length between each said button.

20. An adhesive insert anchor, comprising:
an anchor body having a first end and a terminal end;
said anchor body including an integral adhesive segment adjacent said terminal end;
said adhesive segment including a longitudinal shaft with a plurality of buttons positioned along its length;
said shaft having an outer diameter and said buttons each having an outer diameter wherein the outer diameter of each button is greater than the outer diameter of said shaft;
a friction segment having an outer diameter secured to said anchor body on said first end;
said friction segment being constructed of a material which is electrically non-conductive;
said outer diameter of said friction segment being greater than said outer diameter of each of said buttons.

21. The adhesive insert anchor of claim 20 wherein said friction segment is constructed of a material selected from the group including nylon, polyvinylchloride, and fiberglass.

22. The adhesive insert anchor of claim 20 or 21 wherein said friction segment is constructed of nylon.

23. The adhesive insert anchor according to one of the claims 20 to 22 wherein the friction segment includes a threaded inner circumference and said first end of said anchor body includes a threaded circumference such that the threads on said inner circumference of said friction segment mate the threads on said circumference of said first end of said anchor body so that said friction segment is capable of being screwed onto said first end of said anchor body.

24. The adhesive insert anchor according to one of the claims 20 to 23 wherein said friction segment is press fit onto said first end of said anchor body.

25. The adhesive insert anchor according to one of the claims 20 to 24 wherein said first end of said anchor body includes an internally threaded cavity therein.

26. The adhesive insert anchor of claim 25 further including a screw threaded into said internally threaded cavitiy.

27. The adhesive insert anchor according to one of the claims 20 to 26 wherein said terminal end of said anchor body is defined by a terminal button on said adhesive segment.

28. The adhesive insert anchor of claim 27 wherein each said button is formed integrally with said shaft and is saucer shaped defined by a rounded portion facing said terminal end of said anchor body and a flat shelf facing said friction segment.

29. The adhesive insert anchor according to one of the claims 20 to 28 wherein said friction segment contains knurling thereon.

30. The adhesive insert anchor according to one of the claims 20 to 29 wherein said shaft is knurled along its length between each said button.
